# EUROPEAN PATENT APPLICATION

(11) **EP 4 765 337 A1**
(43) Date of publication of application: **24.06.2026**
(21) Application number: 24864213.4
(22) Date of filing: 01.07.2024
(51) Int. Cl.: H01M 10/63, H02S 40/42

(54) **THERMAL MANAGEMENT SYSTEM, ENERGY STORAGE SYSTEM, AND PHOTOVOLTAIC ENERGY STORAGE SYSTEM**

(30) Priority: 13.09.2023 CN 202311191908
(71) Applicant: Huawei Digital Power Technologies Co., Ltd., Shenzhen, Guangdong 518043 (CN)
(72) Inventor: HUANG, Tao, Shenzhen, Guangdong 518043 (CN); ZHANG, Jie, Shenzhen, Guangdong 518043 (CN); YU, Tao, Shenzhen, Guangdong 518043 (CN); MENG, Hao, Shenzhen, Guangdong 518043 (CN); LIU, Naitong, Shenzhen, Guangdong 518043 (CN)
(74) Representative: Epping - Hermann - Fischer
(86) International application number: PCT/CN2024/102880
(87) International publication number: WO 2025/055488

(57) **Abstract**

This application provides a thermal management system, an energy storage system, and a photovoltaic inverter system. The thermal management system includes a coolant system, a refrigerant system, a heat exchange component, and a load-bearing component. The coolant system includes a coolant flow channel plate and a plurality of coolant end components. The refrigerant system includes a refrigerant flow channel plate and a plurality of refrigerant end components. The heat exchange component is configured to perform heat exchange between the coolant system and the refrigerant system. The plurality of coolant end components and the refrigerant flow channel plate are mounted on a same side of the coolant flow channel plate. The load-bearing component is fastened to the coolant flow channel plate, and the load-bearing component includes a mounting through hole. The components of the thermal management system are integrated. This can reduce mounting and maintenance complexity. The coolant flow channel plate that is easy to manufacture and has low costs is used as a mounting base. A coolant circulation system and a plurality of components in the refrigerant system are mounted on the coolant flow channel plate, and the load-bearing component made of metal is independently disposed on the coolant flow channel plate. This can reduce a size of the refrigerant flow channel plate, thereby reducing manufacturing difficulty and costs of the refrigerant flow channel plate.

## Description

This application claims priority to Chinese Patent Application No. 202311191908.0, filed with the China National Intellectual Property Administration on September 13, 2023 and entitled "THERMAL MANAGEMENT SYSTEM, ENERGY STORAGE SYSTEM, AND PHOTOVOLTAIC ENERGY STORAGE SYSTEM", which is incorporated herein by reference in its entirety.

### TECHNICAL FIELD

This application relates to the field of thermal management technologies, and in particular, to a thermal management system, an energy storage system, a photovoltaic inverter system, and a vehicle.

### BACKGROUND

With booming development of new energy technologies, energy storage technologies are gaining more attention. In addition to a battery cluster configured to store electric energy and an electronic device configured to manage the battery cluster, an existing energy storage system further includes a thermal management system configured to heat or cool the battery cluster and the electronic device, to ensure performance and safety of the battery cluster and the electronic device.

In a conventional technology, a refrigerant is directly used to exchange heat with a thermal management object. This implements cooling, heating, or the like on the thermal management object. However, an existing refrigerant is usually a chemical substance. In one aspect, an anti-corrosion material like metal needs to be used for a pipe to prevent corrosion, which increases costs. In another aspect, when leakage or the like occurs, it is difficult to clear the refrigerant, and the refrigerant is prone to cause harm to a human body and an environment.

In view of this, a secondary cooling technology is proposed. To be specific, heat exchange is performed between a refrigerant and a coolant like water, and a coolant obtained after heat exchange is used to perform cooling, heating, or the like on the thermal management object. The coolant is less corrosive, thereby having a low requirement on a pipe material. For example, plastic may be used. This greatly reduces the costs. In addition, a main component of the coolant is water. When leakage or the like occurs, it is less difficult to clear the coolant, and the coolant causes little harm to the human body and the environment.

However, in the secondary cooling technology, a coolant loop and a refrigerant loop need to be arranged, resulting in problems such as increased costs, complex mounting, and large-space occupation of the thermal management system, especially in an energy storage system or a photovoltaic inverter system in a commercial and industrial application scenario, the existing thermal management system needs to occupy large space for mounting and configuration and has high mounting and configuration costs.

### SUMMARY

This application provides a thermal management system, an energy storage system, and a photovoltaic energy storage system, to reduce costs, facilitate mounting, and save configuration space.

According to a first aspect, a thermal management system is provided. The thermal management system includes a coolant system, a refrigerant system, a heat exchange component, and a load-bearing component. The coolant system includes a coolant flow channel plate and a plurality of coolant end components. The plurality of coolant end components communicate with the heat exchange component through the coolant flow channel. The refrigerant system includes a refrigerant flow channel plate and a plurality of refrigerant end components. The plurality of refrigerant end components communicate with the heat exchange component through the refrigerant channel, and the heat exchange component is used for heat exchange between the coolant system and the refrigerant system. The plurality of coolant end components and the refrigerant flow channel plate are mounted on a same side of the coolant flow channel plate. The load-bearing component is fastened to the coolant flow channel plate. The load-bearing component includes a mounting through hole, and the mounting through hole is configured to mount and fasten the thermal management system.

Components of the thermal management system are integrated. This can reduce mounting and maintenance complexity. Hardness of the refrigerant flow channel plate is higher than hardness of the coolant flow channel plate. The coolant flow channel plate that is easy to manufacture and has low costs is used as a mounting base. A coolant circulation system and a plurality of components in the refrigerant system are mounted on the coolant flow channel plate, and the load-bearing component made of metal is independently disposed on the coolant flow channel plate. This can reduce a size of the refrigerant flow channel plate, thereby reducing manufacturing difficulty and costs of the refrigerant flow channel plate.

The coolant flow channel plate includes a configuration surface. The refrigerant flow channel plate includes a configuration surface and a mounting surface that are opposite to each other. The load-bearing component, the plurality of coolant end components, and the refrigerant system are mounted on the configuration surface of the coolant flow channel plate. The plurality of refrigerant end components are mounted on the configuration surface of the refrigerant flow channel plate. The mounting surface of the refrigerant flow channel plate is attached to the configuration surface of the coolant flow channel plate.

In an implementation, a part or all of the mounting surface of the refrigerant flow channel plate is located on the configuration surface of the coolant flow channel plate. This can reduce an occupied area and reduce accommodation costs.

In another implementation, an area of the mounting surface of the refrigerant flow channel plate is less than an area of the configuration surface of the coolant flow channel plate. This can support miniaturization of a refrigerant flow channel plate that is high in manufacturing difficulty and high costs, thereby improving practicability of the thermal management system in this application.

In an implementation, the load-bearing component is bar-shaped in a first direction. In the first direction, the load-bearing component crosses the coolant flow channel plate. The first direction is parallel to the configuration surface of the coolant flow channel plate. This can improve stability of the mounted thermal management system.

In this case, the refrigerant end component includes an expansion valve. The coolant end component includes a multi-port valve. In the first direction, the heat exchange component is located between the expansion valve and the multi-port valve.

In a second direction, at least one coolant end component is disposed between the load-bearing component and the refrigerant flow channel plate. For example, the coolant end component located between the load-bearing component and the refrigerant flow channel plate includes a liquid pump and/or a multi-port valve. In addition, the coolant system further includes a coolant tank. The coolant tank communicates with the coolant flow channel. The plurality of coolant end component includes the liquid pump. In the second direction, the load-bearing component is located between the coolant tank and the liquid pump. When the thermal management system is placed in a manner that the configuration surface of the coolant flow channel plate is parallel to a gravity direction, the coolant tank is located on a side that is of the load-bearing component and that is away from the ground, and the liquid pump is located on a side that is of the load-bearing component and that is close to the ground. This facilitates coolant supply of the coolant tank to the coolant system through gravity.

In other words, in the second direction perpendicular to the first direction, the coolant tank, the load-bearing component, the liquid pump, and the refrigerant flow channel plate are sequentially arranged.

In addition, the coolant system further includes a heater, the heater is configured to heat the coolant, and the heater is fastened to the load-bearing component. In other words, the load-bearing component includes a mounting surface attached to the coolant, and the heater is disposed on a configuration surface that is of the load-bearing component and that is opposite to the mounting surface. This can reduce occupied configuration space on the coolant flow channel plate caused by disposing of the heater.

In this application, the thermal management system includes a connection portion. One end of the connection portion is fastened to the load-bearing component, and the other end of the connection portion is fastened to the refrigerant flow channel plate. This can reduce a force acting between the refrigerant flow channel plate and the coolant flow channel plate and lower requirements on hardness and strength of a material of the coolant flow channel plate.

In another implementation, the load-bearing component is plate-shaped, and the load-bearing component and the refrigerant flow channel plate are disposed in parallel on the configuration surface of the coolant flow channel plate. In this case, the load-bearing component and the refrigerant flow channel plate may be integrally formed, and in the first direction, the integrally formed load-bearing component and refrigerant flow channel plate cross the coolant flow channel plate.

In addition, the refrigerant flow channel includes a mounting through hole, and the mounting through hole is configured to mount and fasten the thermal management system.

In addition, the coolant flow channel plate includes a configuration surface. The load-bearing component includes a configuration surface and a mounting surface that are opposite to each other. The mounting surface of the load-bearing component is attached to the configuration surface of the coolant flow channel plate.

For example, a liquid pump and/or a multi-port valve in the coolant end component are/is mounted on the configuration surface of the load-bearing component.

According to a second aspect, an energy storage system is provided. The energy storage system includes a battery cluster and a thermal management system. The thermal management system exchanges heat with the battery cluster through a coolant. The thermal management system includes a coolant system, a refrigerant system, a heat exchange component, and a load-bearing component. The coolant system includes a coolant flow channel plate and a plurality of coolant end components. The plurality of coolant end components communicate with the heat exchange component through the coolant flow channel. The refrigerant system includes a refrigerant flow channel plate and a plurality of refrigerant end components. The plurality of refrigerant end components communicate with the heat exchange component through the refrigerant channel, and the heat exchange component is used for heat exchange between the coolant system and the refrigerant system. The plurality of coolant end components and the refrigerant flow channel plate are mounted on a same side of the coolant flow channel plate. The load-bearing component is fastened to the coolant flow channel plate. The load-bearing component includes a mounting through hole, and the mounting through hole is configured to mount and fasten the thermal management system.

A structure and a feature of the thermal management system in the energy storage system are similar to those of the thermal management system in the first aspect. To avoid repetition, detailed descriptions thereof are omitted herein. According to a third aspect, a photovoltaic energy storage system is provided. The photovoltaic energy storage system includes a photovoltaic panel, a photovoltaic inverter, a battery cluster, and a thermal management system. The photovoltaic panel is configured to convert solar energy into electric energy. The battery cluster is configured to store the electric energy from the photovoltaic panel. The photovoltaic inverter is configured to convert a direct current from the photovoltaic panel into an alternating current. The thermal management system exchanges heat with a heat emitting component in the battery cluster or the photovoltaic inverter through the coolant. The thermal management system includes a coolant system, a refrigerant system, a heat exchange component, and a load-bearing component. The coolant system includes a coolant flow channel plate and a plurality of coolant end components. The plurality of coolant end components communicate with the heat exchange component through the coolant flow channel. The refrigerant system includes a refrigerant flow channel plate and a plurality of refrigerant end components. The plurality of refrigerant end components communicate with the heat exchange component through the refrigerant channel, and the heat exchange component is used for heat exchange between the coolant system and the refrigerant system. The plurality of coolant end components and the refrigerant flow channel plate are mounted on a same side of the coolant flow channel plate. The load-bearing component is fastened to the coolant flow channel plate. The load-bearing component includes a mounting through hole, and the mounting through hole is configured to mount and fasten the thermal management system.

For example, the photovoltaic inverter includes a maximum power point tracking MPPT module and an AC/DC converter. One end of the MPPT module is electrically connected to the photovoltaic panel. The other end of the MPPT module is electrically connected to one end of the AC/DC converter. The other end of the AC/DC converter is configured to connect to a power grid or a load. One end of the MPPT module is further electrically connected to an energy storage system. The thermal management system further exchanges heat with the MPPT module and/or the AC/DC converter through the coolant.

A structure and a feature of the thermal management system in the photovoltaic inverter system are similar to those of the thermal management system in the first aspect. To avoid repetition, detailed descriptions thereof are omitted herein.

In addition, the photovoltaic inverter system may be effectively used in a scenario that has a low requirement on a power generation capacity, for example, a commercial and industrial scenario.

According to a fourth aspect, a vehicle is provided. The vehicle includes a motor, a battery, and a thermal management system. The motor is configured to output torque to a wheel. The battery is configured to supply electric energy to the motor. The thermal management system is configured to exchange heat with the battery through a coolant. The thermal management system includes a coolant system, a refrigerant system, a heat exchange component, and a load-bearing component. The coolant system includes a coolant flow channel plate and a plurality of coolant end components. The plurality of coolant end components communicate with the heat exchange component through the coolant flow channel. The refrigerant system includes a refrigerant flow channel plate and a plurality of refrigerant end components. The plurality of refrigerant end components communicate with the heat exchange component through the refrigerant channel, and the heat exchange component is used for heat exchange between the coolant system and the refrigerant system. The plurality of coolant end components and the refrigerant flow channel plate are mounted on a same side of the coolant flow channel plate. The load-bearing component is fastened to the coolant flow channel plate. The load-bearing component includes a mounting through hole, and the mounting through hole is configured to mount and fasten the thermal management system.

A structure and a feature of the thermal management system in the vehicle are similar to those of the thermal management system in the first aspect. To avoid repetition, detailed descriptions thereof are omitted herein.

### BRIEF DESCRIPTION OF DRAWINGS

FIG. 1 is a diagram of an architecture of an example of a photovoltaic energy storage system applicable to a thermal management system according to this application;
FIG. 2 is a diagram of an architecture of an example of an energy storage system applicable to a thermal management system according to this application;
FIG. 3 is a diagram of an architecture of an example of a thermal management system according to this application;
FIG. 4 is a diagram of a layout of an example of a thermal management system according to this application;
FIG. 5 is a diagram of a layout of another example of a thermal management system according to this application;
FIG. 6 is a side view of the thermal management system shown in FIG. 5 in a direction A;
FIG. 7 is a diagram of a layout of still another example of a thermal management system according to this application;
FIG. 8 is a three-dimensional diagram of an example of a thermal management system according to this application; and
FIG. 9 is a diagram of a layout of still another example of a thermal management system according to this application.

### DESCRIPTION OF EMBODIMENTS

The following describes technical solutions of this application with reference to the accompanying drawings.

A thermal management system provided in this application is applicable to an energy storage system or a photovoltaic energy storage system, and is particularly applicable to a scenario in which a scale of a battery cluster used as a thermal management object is small, for example, an energy storage system or a photovoltaic energy storage system in a commercial and industrial power supply scenario.

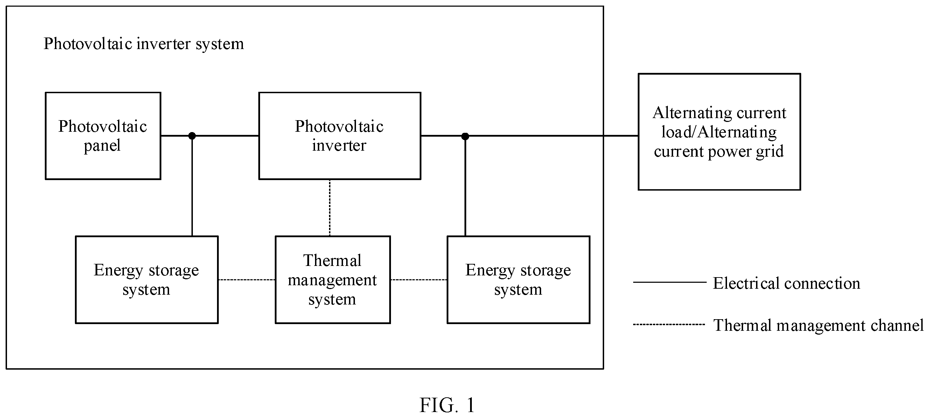

FIG. 1 shows an example of a photovoltaic energy storage system applicable to a thermal management system according to this application. As shown in FIG. 1, the photovoltaic energy storage system includes a photovoltaic (photovoltaic, PV) panel and a photovoltaic inverter. The photovoltaic panel converts solar energy into electric energy. The photovoltaic panel generates a direct current, and the direct current needs to be converted into an alternating current by using the photovoltaic inverter, to facilitate power transmission and utilization.

The photovoltaic inverter includes a direct current to alternating current (direct current to alternating current, DC/AC) converter, and the DC/AC converter is configured to convert a direct current into an alternating current.

The photovoltaic inverter further includes a maximum power point tracking (maximum power point tracking, MPPT) module. The MPPT module is configured to track a maximum voltage value and a maximum current value, so that a power generation system outputs a current at maximum power.

The MPPT module and a DC/DC module in the photovoltaic inverter may be disposed in a same packaged device, or may be disposed in different packaged devices.

The MPPT module may include a direct current to direct current (direct current to direct current, DC/DC) converter. The DC/DC converter is configured to perform voltage stabilization (or voltage conversion) on a direct current generated by a PV module. A direct current obtained through voltage stabilization may be output to an electric energy storage system. One end (denoted as an end A) of the DC/AC converter is connected to the MPPT module and an energy storage system, and the other end B is configured to connect to an alternating current power grid or an alternating current load, so that the DC/AC converter converts a direct current output by the MPPT module or the energy storage system into an alternating current, and supplies the alternating current to the alternating current load or the alternating current power grid.

In addition, the other end B (denoted as an end B) of the DC/AC converter may be further connected to another energy storage system through an inverter (namely, the DC/AC converter). The inverter is configured to convert an alternating current from the photovoltaic inverter into a direct current, and store the direct current in the energy storage system, specifically, in a battery cluster in the energy storage system. In addition, a direct current from the battery cluster may be converted into an alternating current, and the alternating current is supplied to the alternating current load or the alternating current power grid.

It should be noted that the photovoltaic energy storage system provided in this application may include only a battery cluster connected to the end A of the DC/AC converter in the photovoltaic inverter, or may include only a battery cluster connected to the end B of the DC/AC converter in the photovoltaic inverter, or may include both of the foregoing two types of battery clusters.

The photovoltaic energy storage system may further include a thermal management system. The thermal management system cools some or all devices in the battery cluster and the DC/DC converter and the DC/AC converter in the photovoltaic inverter through the coolant. The thermal management system is described in detail below.

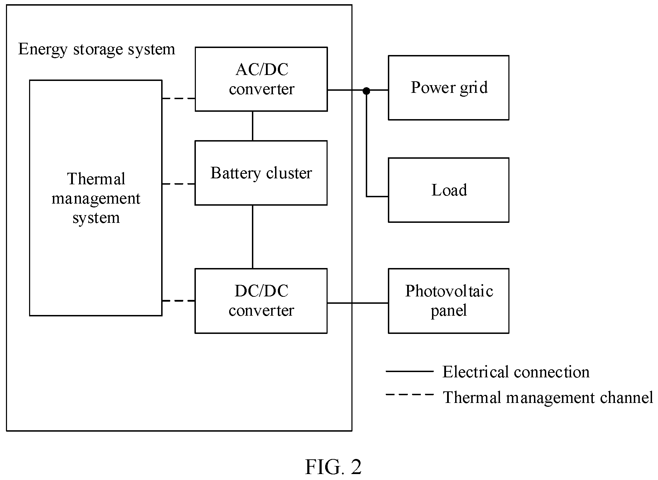

FIG. 2 shows an example of an energy storage system applicable to a thermal management system according to this application. As shown in FIG. 2, the energy storage system includes one or more DC/DC converters, one or more battery clusters, and one or more AC/DC converters. In addition, the energy storage system further includes one or more battery management systems (battery management systems, BMSs), although the one or more battery management systems are not shown in the figure. Each battery pack corresponds to one BMS. The BMS is usually configured to implement functions such as dynamic monitoring of battery pack charging and discharging, battery pack balancing, and evaluation of a state of charge of the battery pack.

When the energy storage system includes a plurality of battery clusters, the plurality of battery clusters are connected in parallel. A plurality of battery packs form a battery cluster. Each battery pack includes one or more packs (packs). In an implementation, each battery pack may further include a battery management unit (battery management unit, BMU), and the energy storage system further includes a battery control unit (battery control unit, BCU). The BMS includes the BMU and the BCU. The BMU is configured to monitor information such as a voltage and a temperature of the pack, and report the information to the BCU. The BCU monitors the pack based on the information, and generates a power control instruction for the pack.

The pack in this embodiment may be a single storage battery, or may be a storage battery cluster including a plurality of storage batteries. Specifically, the storage battery may alternatively be one or a combination of a lead-carbon battery, a lithium iron phosphate battery, a ternary lithium battery, a sodium-sulfur battery, and a flow battery.

In the energy storage system, one end of the DC/DC converter is configured to connect to the photovoltaic panel, and the other end of the DC/DC converter is connected to the battery cluster. The DC/DC converter is configured to perform power conversion such as voltage stabilization on a direct current from the photovoltaic panel, and then output a processed current to the battery cluster. One end of the AC/DC converter is connected to the battery cluster, and the other end of the AC/DC converter is connected to an alternating current power grid and/or an alternating current battery. The AC/DC converter performs current conversion on a direct current from the battery, to convert the direct current into an alternating current, and supplies the alternating current to a load or the power grid.

In a possible implementation, another DC/DC converter may be further configured between the AC/DC converter and the battery cluster, although the another DC/DC converter is not shown in the figure. The another DC/DC converter is configured to perform power conversion such as boosting on a direct current from the battery cluster.

The energy storage system may further include a thermal management system. The thermal management system cools some or all devices in the battery cluster, the DC/DC converter, and the DC/AC converter in the energy storage system through a coolant.

It should be understood that the listed scenario to which the thermal management system provided in this application is applicable are merely examples for description, and this application is not limited thereto. For example, the thermal management system provided in this application may be further effectively applicable to a vehicle like an electric vehicle or a hybrid vehicle. The vehicle includes a battery and a motor. The motor is powered by the battery to generate torque, to drive the vehicle. The thermal management system is configured to perform heat exchange with the battery through the coolant, to cool or heat the battery.

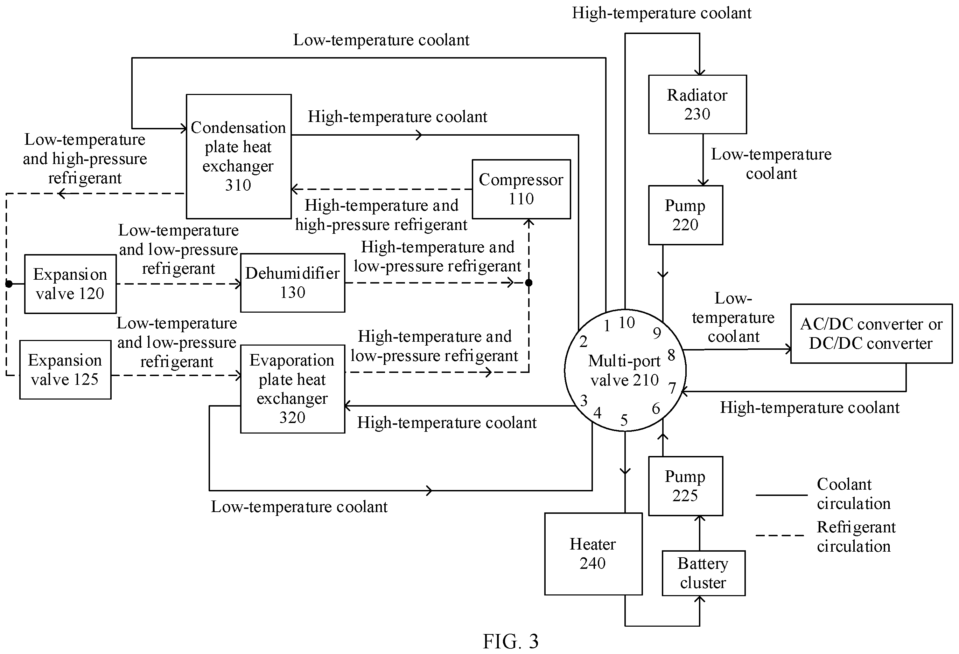

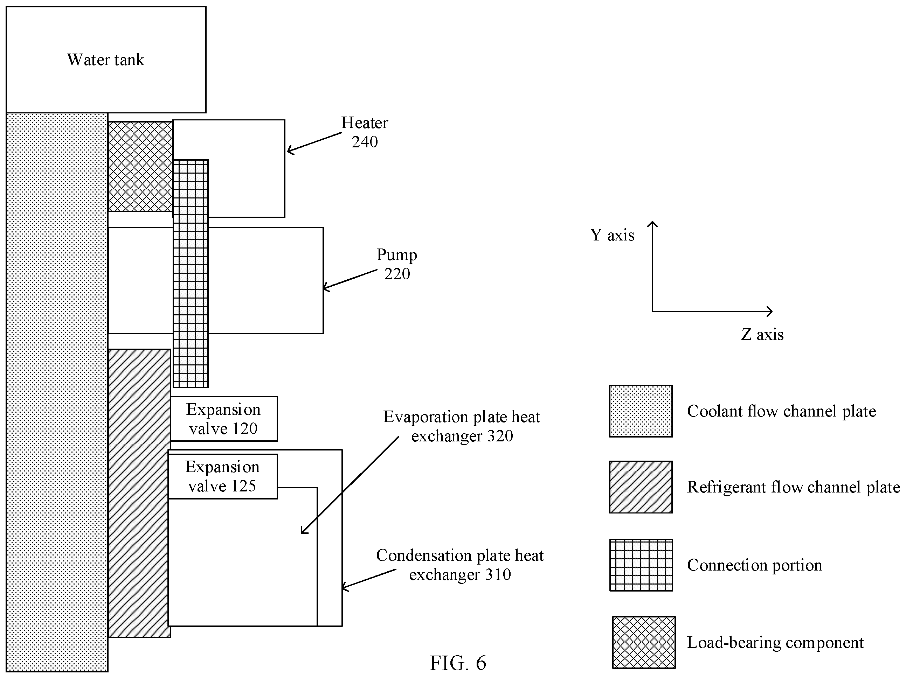

The following describes in detail the thermal management system in this application with reference to FIG. 3 to FIG. 7.

FIG. 3 is a diagram of a logical architecture of an example of a thermal management system according to this application. As shown in FIG. 3, the thermal management system includes a coolant system, a refrigerant system, and a heat exchange system.

The coolant system uses a coolant as a thermal management medium. As an example rather than a limitation, the coolant may include water. In addition, when thermal management is performed on the battery, the coolant may be deionized to avoid conduction of the coolant. In addition, when the energy storage system or a photovoltaic inverter system is used in a cold region, an antifreeze may be further added to the coolant, to prevent the coolant from solidifying.

The refrigerant system uses a refrigerant as a thermal management medium. The refrigerant (Refrigerant) is a substance that transfers heat through evaporation and condensation. The refrigerant is a substance that easily changes to gas by absorbing heat and easily changes to liquid by discharging heat. A high-pressure liquid refrigerant absorbs heat when the high-pressure liquid refrigerant is depressurized into gas. As an example rather than a limitation, the refrigerant in this application may include freon, alkane, ammonia, carbon dioxide, or the like.

As shown in FIG. 3, the heat exchange system includes a condensation plate heat exchanger 310 and an evaporation plate heat exchanger 320. The condensation plate heat exchanger 310 and the evaporation plate heat exchanger 320 each include a coolant channel and a refrigerant channel, although the coolant channel and the refrigerant channel are not shown in the figure. Therefore, the coolant and the refrigerant can exchange heat in the condensation plate heat exchanger 310 and the evaporation plate heat exchanger 320. In this application, to facilitate heat exchange, components in the heat exchange system, for example, the condensation plate heat exchanger 310 and the evaporation plate heat exchanger 320, are made of a material with high thermal conductivity like metal.

As shown in FIG. 3, the refrigerant system includes a compressor 110, an expansion valve 120, and a dehumidifier 130.

The compressor 110 is configured to compress a low-temperature and low-pressure gaseous refrigerant that enters from an inlet. A temperature of the compressed gaseous refrigerant increases, and the compressed gaseous refrigerant is converted into a high-temperature and high-pressure gaseous refrigerant. The high-temperature and high-pressure gaseous refrigerant is output from an outlet of the compressor 110.

The expansion valve 120 is configured to: release pressure of the high-pressure refrigerant, and cool the pressure-released refrigerant to convert a pressure-released refrigerant into a low-temperature refrigerant.

The dehumidifier 130 includes a refrigerant channel, and the refrigerant may exchange heat with an external environment through the dehumidifier 130.

As shown in FIG. 3, the inlet of the compressor is connected to a refrigerant inlet of the condensation plate heat exchanger 310. It should be noted that the refrigerant system includes a refrigerant flow channel through which the inlet of the compressor communicates with the refrigerant inlet of the condensation plate heat exchanger 310, although the refrigerant flow channel is not shown in the figure. In the following, unless otherwise specified, that two devices or ports communicate with each other may be understood as that the two devices or ports communicate with each other through the refrigerant channel.

A refrigerant outlet of the condensation plate heat exchanger 310 communicates with an inlet of the expansion valve 120. An outlet of the expansion valve 120 communicates with an inlet of the dehumidifier 130. An outlet of the dehumidifier 130 communicates with the inlet of the compressor 110.

The refrigerant outlet of the condensation plate heat exchanger 310 further communicates with an inlet of an expansion valve 125. An outlet of the expansion valve 125 communicates with a refrigerant inlet of the evaporation plate heat exchanger 320. A refrigerant outlet of the evaporation plate heat exchanger 320 communicates with the inlet of the compressor 110.

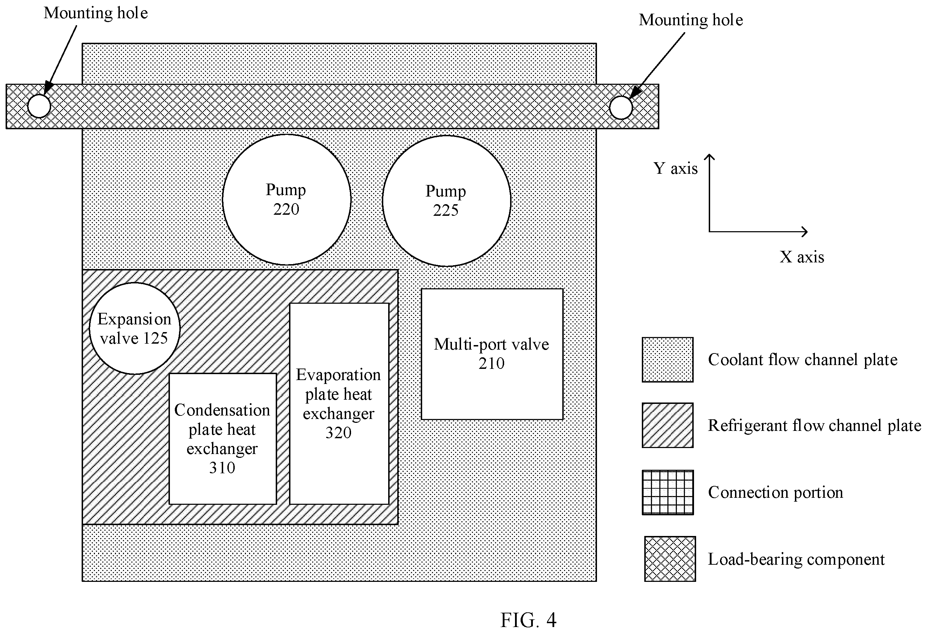

As shown in FIG. 4 to FIG. 8, in this application, the refrigerant system further includes a refrigerant flow channel plate, and a refrigerant channel through which devices or ports communicate with each other is integrated into the refrigerant flow channel plate.

The following describes in detail a flow path, a temperature change, and a gaseous phase change of the refrigerant in the refrigerant system.

As shown in FIG. 3, the compressor 110 compresses the low-temperature and low-pressure gaseous refrigerant, and the high-temperature and high-pressure gaseous refrigerant formed through compression flows from the outlet of the compressor 110, passes through the flow channel integrated in the refrigerant flow channel plate, and flows into the refrigerant inlet of the condensation plate heat exchanger 310.

The high-temperature and high-pressure gaseous refrigerant exchanges heat with the low-temperature coolant in the condensation plate heat exchanger 310, and the low-temperature and high-pressure refrigerant (whose gas phase status is a liquid phase or a gas-liquid phase) formed through heat exchange flows from the refrigerant outlet of the condensation plate heat exchanger 310, passes through the flow channel integrated in the refrigerant flow channel plate, and separately flows into the inlet of the expansion valve 120 and the inlet of the expansion valve 125.

The low-temperature and high-pressure refrigerant releases pressure and discharges heat in the expansion valve 120 and the expansion valve 125, and is converted into a low-temperature and low-pressure refrigerant (whose gas phase status is a liquid phase or a gas-liquid phase). The low-temperature and low-pressure refrigerant flows from the outlet of the expansion valve 120, passes through the flow channel integrated in the refrigerant flow channel plate, and flows into the inlet of the dehumidifier 130. In addition, the low-temperature and low-pressure refrigerant flows from the outlet of the expansion valve 125, passes through the flow channel integrated in the refrigerant flow channel plate, and flows into the refrigerant inlet of the evaporation plate heat exchanger 320.

In the dehumidifier 130, the low-temperature and low-pressure refrigerant exchanges heat with an external environment (specifically, absorbs heat), to form a high-temperature and low-pressure refrigerant (whose gas phase status is a gas phase or a gas-liquid phase). The high-temperature and low-pressure refrigerant flows from the outlet of the dehumidifier 130, passes through the flow channel integrated in the refrigerant flow channel plate, and flows into the inlet of the compressor 110.

In the evaporation plate heat exchanger 320, the low-temperature and low-pressure refrigerant exchanges heat with the high-temperature coolant (specifically, absorbs heat), to form the high-temperature and low-pressure refrigerant (whose gas phase status is a gas phase or a gas-liquid phase). The high-temperature and low-pressure refrigerant flows from the refrigerant outlet of the evaporation plate heat exchanger 320, passes through the flow channel integrated in the refrigerant flow channel plate, and flows into the inlet of the compressor 110.

In this way, a thermal circulation process of the refrigerant is completed.

As described above, a chemical substance used as a refrigerant is usually corrosive, and a temperature difference is large during gas-liquid conversion. In view of this, in this application, a corrosion-resistant, high-temperature-resistant, and low-temperature-resistant material like metal is used to manufacture devices in the refrigerant circulation, for example, the refrigerant flow channel plate, the dehumidifier, and the expansion valve.

It should be understood that the listed structure of the refrigerant system is merely an example for description, and this application is not limited thereto. For example, the refrigerant system in this application may alternatively not include the dehumidifier 130 and the expansion valve 120.

Return to FIG. 3. The coolant system includes a multi-port valve 210, a pump 220, a radiator 230, a pump 225, and a heater 240.

The multi-port valve 210 includes a plurality of ports, and the multi-port valve 21 may control a communication relationship between the plurality of ports. A working principle of the multi-port valve is to enable, by rotating a valve plug, different flow channels to communicate with each other, to control different fluid media through switching. The multi-port valve is usually composed of a valve body, the valve plug, a spring, a sealing ring, a handle, an actuator, and the like. An internal shape of the valve body is designed according to different functional requirements, and the valve body usually includes an inlet and an outlet, a central flow channel, and a plurality of flow channel connection holes. The valve plug is usually cylindrical, and there are a plurality of channels inside the valve plug. When the valve plug is rotated, different channels may be connected to each other.

The pump 220 and the pump 225 are configured to transmit mechanical energy or other external energy to the coolant, to increase energy of the coolant, thereby increasing a flow speed and pressure of the coolant.

The radiator 230 is configured to exchange heat between the coolant and the external environment.

The heater 240 is configured to heat the coolant. For example, the heater 240 may be an electric heater, and is configured to convert electric energy into thermal energy.

As shown in FIG. 3, a port 1 of the multi-port valve 210 communicates with the coolant inlet of the condensation plate heat exchanger 310. It should be noted that the coolant system includes a coolant flow channel through which the port 1 of the multi-port valve 210 communicates with the coolant inlet of the condensation plate heat exchanger 310, although the coolant flow channel is not shown in the figure. In the following, unless otherwise specified, that two devices or ports communicate with each other may be understood as that the two devices or ports communicate with each other through the coolant channel.

The coolant outlet of the condensation plate heat exchanger 310 communicates with a port 2 of the multi-port valve 210.

A port 3 of the multi-port valve 210 communicates with the coolant inlet of the evaporation plate heat exchanger 320, and the coolant outlet of the evaporation plate heat exchanger 320 communicates with a port 4 of the multi-port valve 210.

The port 4 of the multi-port valve 210 communicates with an inlet of the heater 240. The coolant flowing from an outlet of the heater 240 may exchange heat with a battery cluster, and the coolant obtained after heat exchange may flow into an inlet of the pump 225. An outlet of the pump 225 communicates with a port 6 of the multi-port valve 210. The coolant flowing from a port 8 of the multi-port valve 210 may exchange heat with an AC/DC converter or a DC/DC converter, and the coolant obtained after heat exchange may flow into a port 7 of the multi-port valve 210. A port 10 of the multi-port valve 210 communicates with an inlet of the radiator 230. An outlet of the radiator 230 communicates with an inlet of the pump 220. An outlet of the pump 220 communicates with a port 9 of the multi-port valve 210.

As shown in FIG. 4 to FIG. 7, in this application, the coolant system further includes a coolant flow channel plate, and a coolant channel through which devices or ports communicate with each other is integrated into the coolant flow channel plate.

The following describes in detail a flow path and a temperature change of the coolant in the coolant system.

As shown in FIG. 3, the low-temperature coolant flows from the port 1 of the multi-port valve 210, passes through the channel integrated in the coolant flow channel plate, and flows into the coolant inlet of the condensation plate heat exchanger 310.

The low-temperature coolant exchanges heat with the high-temperature refrigerant in the condensation plate heat exchanger 310, and then a temperature of the low-temperature coolant increases to form a high-temperature coolant. The high-temperature coolant flows from the coolant outlet of the condensation plate heat exchanger 310, passes through the flow channel integrated in the coolant flow channel plate, and flows into the port 2 of the multi-port valve 210.

When a thermal management object needs to be heated (for example, when an external temperature is low and the battery cluster needs to be heated), the multi-port valve 210 controls the port 2 to communicate with the port 5. The high-temperature coolant flows from the port 5 of the multi-port valve 210 into the battery cluster under an action of the pump 225 and exchanges heat with the battery cluster to form a low-temperature coolant, and then the low-temperature coolant flows into the port 6 of the multi-port valve 210 under an action of the pump 225. It should be noted that, when the new coolant circulation system includes the heater 240, before the high-temperature coolant flows into the battery cluster, the high-temperature coolant may be further heated by using the heater 240. In addition, the multi-port valve 210 may control the port 6 to communicate with the port 1, so that the low-temperature coolant can exchange heat with the high-temperature refrigerant in the condensation plate heat exchanger 310, to form the high-temperature coolant.

As shown in FIG. 3, the high-temperature coolant flows from the port 3 of the multi-port valve 210, passes through the channel integrated in the coolant flow channel plate, and flows into the coolant inlet of the evaporation plate heat exchanger 320.

The high-temperature coolant exchanges heat with the low-temperature refrigerant in the evaporation plate heat exchanger 320, and then a temperature of the high-temperature coolant decreases to form a low-temperature coolant. The low-temperature coolant flows from the coolant outlet of the evaporation plate heat exchanger 320, passes through the flow channel integrated in the coolant flow channel plate, and flows into the port 4 of the multi-port valve 210. When the battery cluster needs to be cooled, the multi-port valve 210 controls the port 4 to communicate with the port 5. The low-temperature coolant flows from the port 5 of the multi-port valve 210 into the battery cluster under an action of the pump 225 and exchanges heat with the battery cluster to form a high-temperature coolant, and then the high-temperature coolant flows into the port 6 of the multi-port valve 210 under an action of the pump 225. In addition, the multi-port valve 210 may control the port 6 to communicate with the port 3, so that the high-temperature coolant can exchange heat with the low-temperature refrigerant in the evaporation plate heat exchanger 320, to form the low-temperature coolant.

When the AC/DC converter or the DC/DC converter needs to be cooled, the multi-port valve 210 controls the port 4 to communicate with the port 8. The low-temperature coolant flows from the port 8 of the multi-port valve 210, passes through a coolant pipe, flows into the AC/DC converter or the DC/DC converter, and exchanges heat with the AC/DC converter or the DC/DC converter to form a high-temperature coolant, and then the high-temperature coolant flows into the port 7 of the multi-port valve 210. In addition, the multi-port valve 210 may control the port 7 to communicate with the port 3, so that the high-temperature coolant can exchange heat with the low-temperature refrigerant in the evaporation plate heat exchanger 320, to form the low-temperature coolant.

In addition, the multi-port valve 210 controls the port 4 to communicate with the port 10. The low-temperature coolant flows from the port 10 of the multi-port valve 210 under an action of the pump 220, passes through the coolant pipe, flows into the radiator 230, and exchanges heat with an external environment in the radiator 230 to form a low-temperature coolant, and then the low-temperature coolant flows into the port 9 of the multi-port valve 210. In addition, the multi-port valve 210 may control the port 9 to communicate with the port 1, so that the low-temperature coolant can exchange heat with the high-temperature refrigerant in the condensation plate heat exchanger 310, to form the high-temperature coolant.

In this way, a thermal circulation process of the coolant is completed.

As described above, because the coolant has low corrosiveness, and a temperature change after heat exchange is small, in this application, a waterproof material with low costs, for example, plastic or rubber, is used to manufacture devices in the refrigerant circulation, for example, the coolant flow channel plate.

It should be understood that the listed structure of the coolant system is merely an example for description, and this application is not limited thereto. For example, the coolant system in this application may not include the heater 240. For another example, the coolant system in this application may further include a coolant tank. The coolant tank is configured to supply coolant for coolant circulation, to compensate for a loss caused by evaporation of the coolant. The following describes in detail the components of the thermal management system in this application with reference to FIG. 4 to FIG. 8.

To reduce mounting and maintenance difficulty, a plurality of components or parts in the thermal management system in this application are integrated. As an example rather than a limitation, the plurality of components that are integrated may include a plurality of coolant end components, a plurality of refrigerant end components, and a plurality of heat exchange components. The coolant end component includes a coolant flow channel plate, a pump 220, a pump 225, and a multi-port valve 210. The refrigerant end component includes a refrigerant flow channel plate and an expansion valve 125. The heat exchange component includes an evaporation plate heat exchanger 320 and a condensation plate heat exchanger 310.

The coolant flow channel plate is plate-shaped in a first plane, and the first plane is a plane formed by an X axis and a Y axis shown in FIG. 4. In other words, the coolant flow channel plate has two surfaces with a large area. One of the surfaces is referred to as a configuration surface (namely, an example of the configuration surface of the coolant flow channel plate). The entire configuration surface is roughly planar. However, this does not exclude a case in which a rugged part is formed to meet design and applicability requirements. In other words, the entire configuration surface of the coolant flow channel plate is formed in a shape approximately parallel to the first plane formed by the X axis and the Y axis.

A plurality of components of the coolant system, for example, the pump 220, the pump 225, and the multi-port valve 210, are configured on the configuration plane of the coolant flow channel plate. In addition, a connector for outputting a coolant to a thermal management object and a connector for communicating with a radiator 230 are further disposed on the coolant flow channel plate, although the connectors are not shown in the figure.

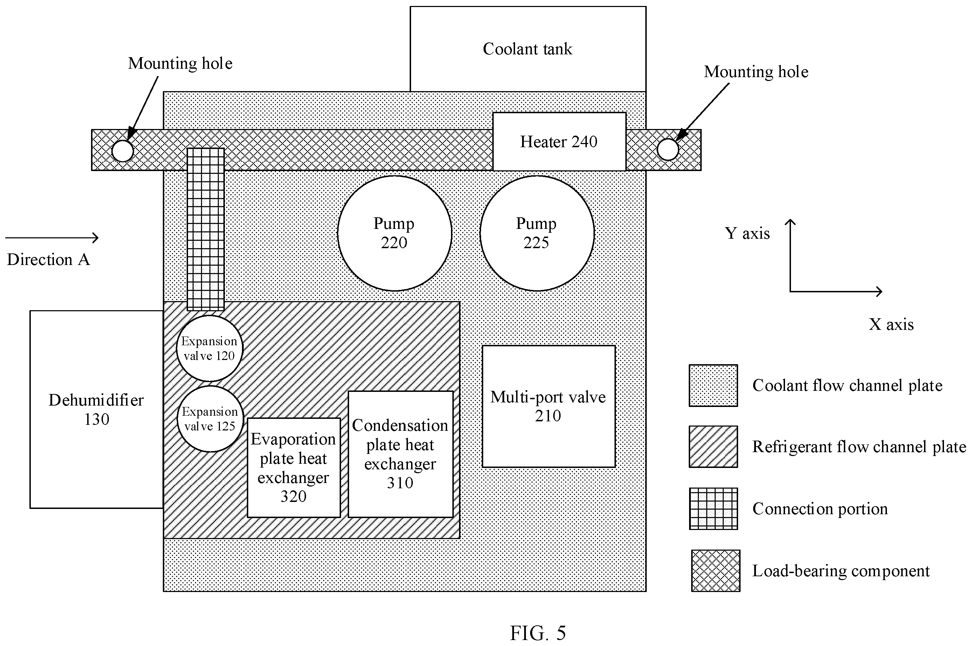

In an implementation, as shown in FIG. 5, the pump 220 and the pump 225 are disposed in parallel in an X-axis direction (namely, an example of a first direction). In addition, in a Y-axis direction (namely, an example of a second direction), the pump 220 and the pump 225 are located above the multi-port valve 210.

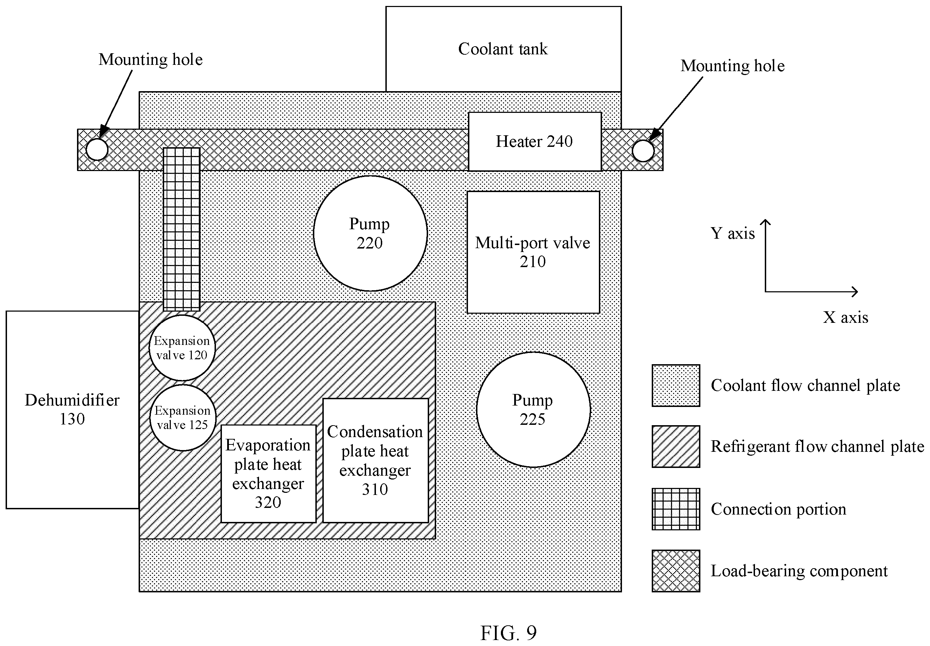

In another implementation, as shown in FIG. 9, the pump 220 and the multi-port valve 210 are disposed in parallel in the X-axis direction. In addition, in the Y-axis direction, the pump 225 is located below the multi-port valve 210.

A plurality of components of the refrigerant system, for example, the refrigerant flow channel plate, are further configured on the configuration plane. In the Y-axis direction, the pump 220 and the pump 225 are located above the refrigerant flow channel plate. In addition, the refrigerant flow channel plate and the multi-port valve 210 are disposed in parallel in the X-axis direction.

The refrigerant flow channel plate is plate-shaped in the first plane. In other words, the refrigerant flow channel plate has two surfaces with a large area. One of the surfaces is referred to as a mounting surface for ease of understanding and description. A shape of the mounting surface corresponds to the shape of the configuration surface of the coolant flow channel plate, so that strength and stability of a mounting connection between the refrigerant flow channel plate and the coolant flow channel plate can be improved, and a gap generated due to a mismatch can be reduced. This avoids a waste of configuration space. The other surface with a large area (namely, an opposite surface of the mounting surface, which is referred to as a configuration surface for ease of understanding and description) of the refrigerant flow channel plate is roughly planar. However, this does not exclude a case in which a rugged part is formed to meet design and applicability requirements. In other words, the entire configuration surface of the refrigerant flow channel plate is formed in a shape approximately parallel to the first plane formed by the X axis and the Y axis.

A plurality of components of the refrigerant system, for example, the expansion valve 125, are configured on the configuration plane of the refrigerant flow channel plate.

In addition, a plurality of components in the heat exchange system, for example, the condensation plate heat exchanger 310 and the evaporation plate heat exchanger 320, are configured on the configuration plane of the refrigerant flow channel plate. It should be noted that the condensation plate heat exchanger 310 and the evaporation plate heat exchanger 320 need to communicate with the coolant flow channel plate. Therefore, through holes may be provided on the refrigerant flow channel plate, and pipes through which coolant connectors of the condensation plate heat exchanger 310 and the evaporation plate heat exchanger 320 communicate with the coolant flow channel plate are disposed in the through holes.

In an implementation, the condensation plate heat exchanger 310 and the evaporation plate heat exchanger 320 are disposed in parallel in the X-axis direction. In addition, the expansion valve 125 and components in the heat exchange system are disposed in parallel in the X-axis direction.

In other words, in the X-axis direction, the condensation plate heat exchanger 310 and the evaporation plate heat exchanger 320 are located between the expansion valve 125 and the multi-port valve 210.

It should be understood that the listed configuration relationship between the condensation plate heat exchanger 310 and the evaporation plate heat exchanger 320 is merely an example for description, and this application is not limited thereto. For example, the condensation plate heat exchanger 310 and the evaporation plate heat exchanger 320 may alternatively be disposed in parallel in the Y-axis direction.

In this application, the thermal management system further includes a load-bearing component. Generally, the thermal management system needs to be suspended on a support structure like a wall. The load-bearing beam is used as a connecting piece between the thermal management system and the support structure. When the thermal management system is in a mounted and suspended state, the load-bearing component is used as an action component for gravity of the thermal management system. In view of this, the load-bearing component may be made of a material with high hardness, for example, metal.

The load-bearing component is fixedly mounted on the coolant flow channel plate.

In an implementation, as shown in FIG. 4, the coolant flow channel plate is bar-shaped. For example, the bar-shaped load-bearing component is configured in the X-axis direction.

In a possible implementation, a length of the load-bearing component is greater than a size of the coolant flow channel plate in the X-axis direction, so that the load-bearing component crosses the coolant flow channel plate in the X-axis direction.

Because the heat exchange system is suspended for mounting, the load-bearing component may be located above other components (for example, the pump 220, the pump 225, the refrigerant flow channel plate, and the multi-port valve 210) on the coolant flow channel plate in the Y-axis direction. In other words, after suspension mounting, the other components on the coolant flow channel plate are located below the load-bearing component in a gravity direction. This facilitates configuration stability of the heat exchange system.

In this application, a mounting hole may be provided in the load-bearing component, and a bolt passes through the mounting hole and is tightly fastened to the wall, to complete mounting of the thermal management system.

In a possible implementation, the thermal management system further includes a connection portion. The connection portion may be made of a material (for example, metal) with high strength. One end of the connection portion is connected to the load-bearing component, and the other end of the connection portion is connected to the refrigerant flow channel plate. This reduces an acting force between the refrigerant flow channel plate and the coolant flow channel plate, thereby reducing requirements on hardness and strength of the coolant flow channel plate.

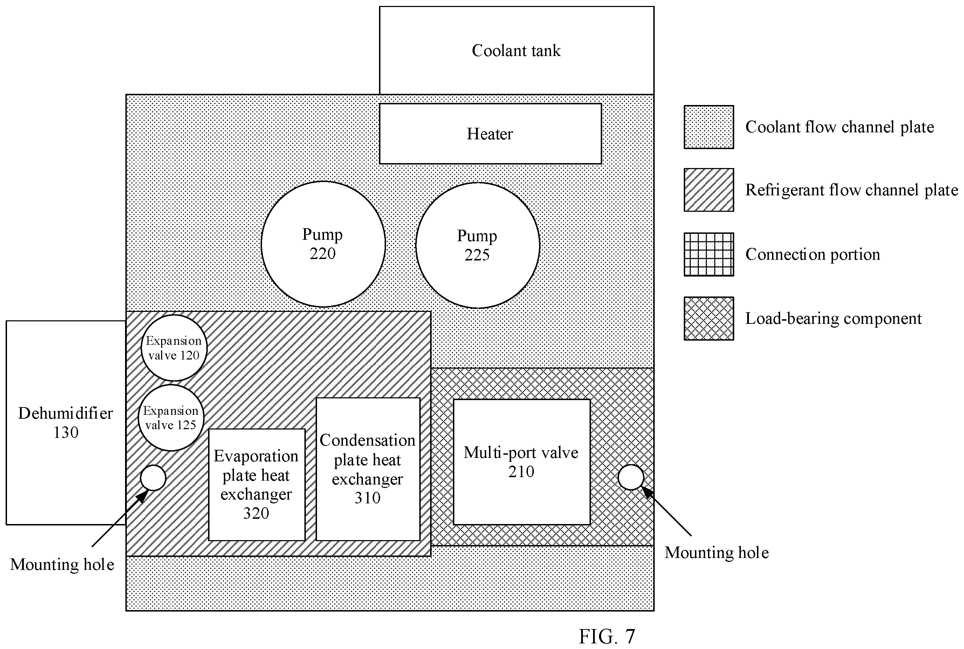

In another implementation, as shown in FIG. 7, the load-bearing component is plate-shaped, and in the X-axis direction, the refrigerant flow channel plate and the load-bearing component are disposed in parallel. Alternatively, the refrigerant flow channel plate and the load-bearing component may be configured in parallel in another direction. Examples are not listed one by one in this application.

In this case, a surface of the plate-shaped load-bearing component (namely, a mounting surface of the load-bearing component) is attached to a configuration surface of the refrigerant flow channel plate.

In addition, one or more components in the coolant end components, for example, the multi-port valve and/or the liquid pump, are/is disposed on the other surface (namely, a configuration surface of the load-bearing component) of the plate-shaped load-bearing component.

For example, the load-bearing component and the refrigerant flow channel plate are made of a same material and are integrally formed. In addition, the refrigerant flow channel plate and the load-bearing component cross the coolant flow channel plate in the X-axis direction. In this case, mounting holes are separately provided on the refrigerant flow channel plate and the load-bearing component. In an implementation, as shown in FIG. 7, a projection of the mounting hole on the coolant flow channel plate is located on the coolant flow channel plate. In this case, a through hole for a bolt to pass through may be disposed on the coolant flow channel plate. In another implementation, a width of a component formed by integrating the coolant flow channel plate and the load-bearing component in the X-axis direction may be greater than a width of the coolant flow channel plate in the X-axis direction, and a projection of the mounting hole on the coolant flow channel plate is located outside a range of the coolant flow channel plate. In this case, there is no need to provide, on the coolant flow channel plate, a through hole for a bolt to pass through.

In addition, the coolant end components such as the pump or the multi-port valve may be disposed on the load-bearing component, so that configuration space on the load-bearing component can be effectively used. This facilitates miniaturization of the thermal management system in this application.

In addition, a through hole is provided on the load-bearing component, although the through hole is not shown in the figure. A pipe through which each port of the multi-port valve communicates with the coolant flow channel plate is disposed in the through hole.

It should be understood that the listed integrated layout of the heat cycling system is merely an example rather than a limitation, and the layout may be correspondingly changed based on different components that are integrated. For example, the plurality of components that are integrated may further include one or more of the following components:

### 1. Coolant tank (namely, an example of the coolant end component)

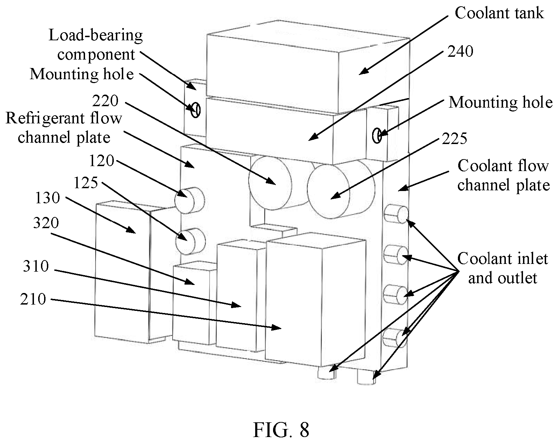

As shown in FIG. 5 to FIG. 8, the coolant tank is disposed above the Y-axis direction of the coolant flow channel plate. In other words, after the heat exchange system is suspended, the components of the integrated heat exchange system are located below the coolant tank in the gravity direction. In this way, coolant supply is implemented through gravity. To be specific, as shown in FIG. 8, when the heat exchange system is normally used, the coolant flow channel plate is parallel to the gravity direction. In this case, from a side that is of the coolant flow channel plate and that is away from the ground, in the gravity direction, the coolant tank, the load-bearing component, the liquid pump, and the refrigerant flow channel plate are sequentially configured.

### 2. Heater 240 (namely, another example of the coolant end component)

As shown in FIG. 5 to FIG. 8, the heater 240 may be configured on the load-bearing component, so that occupied configuration space on the configuration surface of the coolant flow channel plate can be reduced.

### 3. Dehumidifier 130 (namely, an example of the refrigerant end component)

The dehumidifier 130 is disposed on a side surface of the refrigerant flow channel plate, and a projection of the dehumidifier 130 on the first plane is outside a projection range of the coolant flow channel plate on the first plane, so that occupied configuration space on the configuration surface of the coolant flow channel plate can be reduced. In addition, in this case, an expansion valve 120 communicating with the dehumidifier 130 is disposed on the configuration plane of the refrigerant flow channel plate.

In an implementation, the expansion valve 120 and the expansion valve 125 are disposed in parallel in the Y-axis direction.

To reduce costs, the coolant flow channel plate is usually made of a non-metal material, and therefore is not suitable for use as a load-bearing portion of the heat exchange system. In view of this, based on an idea, a refrigerant flow channel plate made of metal may be used as the load-bearing portion of the heat exchange system. In this case, the refrigerant flow channel plate needs to be manufactured with a large size, to meet mounting requirements of the coolant circulation system and a plurality of components in the refrigerant system. Therefore, it is difficult to process the refrigerant flow channel plate, and costs are high. In contrast, in the heat circulation system in this application, the coolant flow channel plate that is easy to manufacture and has low costs is used as a mounting base. The coolant circulation system and the plurality of components in the refrigerant system are mounted on the coolant flow channel plate, and the load-bearing component made of metal is independently disposed on the coolant flow channel plate. This can reduce a size of the refrigerant flow channel plate, thereby reducing manufacturing difficulty and costs of the refrigerant flow channel plate.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A thermal management system, comprising a coolant system, a refrigerant system, a heat exchange component, and a load-bearing component, wherein the coolant system comprises a coolant flow channel plate and a plurality of coolant end components, the plurality of coolant end components communicate with the heat exchange component through the coolant flow channel, the refrigerant system comprises a refrigerant flow channel plate and a plurality of refrigerant end components, the plurality of refrigerant end components communicate with the heat exchange component through the refrigerant channel, and the heat exchange component is used for heat exchange between the coolant system and the refrigerant system;
the plurality of coolant end components and the refrigerant flow channel plate are mounted on a same side of the coolant flow channel plate; and
the load-bearing component is fastened to the coolant flow channel plate, the load-bearing component comprises a mounting through hole, and the mounting through hole of the load-bearing component is configured to mount and fasten the thermal management system.

2. The thermal management system according to claim 1, wherein the coolant flow channel plate comprises a configuration surface, the refrigerant flow channel plate comprises a configuration surface and a mounting surface that are opposite to each other, the load-bearing component, the plurality of coolant end components, and the refrigerant system are mounted on the configuration surface of the coolant flow channel plate, the plurality of refrigerant end components are mounted on the configuration surface of the refrigerant flow channel plate, and the mounting surface of the refrigerant flow channel plate is attached to the configuration surface of the coolant flow channel plate.

3. The thermal management system according to claim 2, wherein a part or all of the mounting surface of the refrigerant flow channel plate is located on the configuration surface of the coolant flow channel plate.

4. The thermal management system according to claim 2 or 3, wherein an area of the mounting surface of the refrigerant flow channel plate is less than an area of the configuration surface of the coolant flow channel plate.

5. The thermal management system according to any one of claims 1 to 4, wherein the load-bearing component is bar-shaped, and in an extension direction of the load-bearing component, the load-bearing component crosses the coolant flow channel plate.

6. The thermal management system according to claim 5, wherein the refrigerant end component comprises an expansion valve, and the coolant end component comprises a multi-port valve; and
in the extension direction of the load-bearing component, the heat exchange component is located between the expansion valve and the multi-port valve.

7. The thermal management system according to claim 5 or 6, wherein the coolant system comprises a coolant tank and a liquid pump, and the coolant tank communicates with the coolant flow channel; and
in a direction perpendicular to the extension direction of the load-bearing component, the coolant tank, the load-bearing component, the liquid pump, and the refrigerant flow channel plate are sequentially arranged.

8. The thermal management system according to any one of claims 5 to 7, wherein the coolant system further comprises a heater, the heater is configured to heat the coolant, and the heater is fastened to the load-bearing component.

9. The thermal management system according to any one of claims 5 to 8, wherein the thermal management system comprises a connection portion, one end of the connection portion is fastened to the load-bearing component, and the other end of the connection portion is fastened to the refrigerant flow channel plate.

10. The thermal management system according to any one of claims 1 to 4, wherein the load-bearing component is plate-shaped, and the load-bearing component and the refrigerant flow channel plate are disposed in parallel on the configuration surface of the coolant flow channel plate.

11. The thermal management system according to claim 10, wherein the refrigerant flow channel comprises a mounting through hole, and the mounting through hole of the refrigerant flow channel is configured to mount and fasten the thermal management system.

12. The thermal management system according to claim 10 or 11, wherein the load-bearing component comprises a configuration surface and a mounting surface that are opposite to each other, the mounting surface of the load-bearing component is attached to the configuration surface of the coolant flow channel plate, and a multi-port valve and/or a liquid pump in the coolant system are/is mounted on the configuration surface of the load-bearing component.

13. The thermal management system according to any one of claims 1 to 12, wherein a material of the refrigerant flow channel plate comprises metal, and a material of the coolant flow channel plate comprises non-metal.

14. An energy storage system, comprising a battery cluster and the thermal management system according to any one of claims 1 to 13, wherein the thermal management system is configured to exchange heat with the battery cluster through a coolant.

15. A photovoltaic energy storage system, comprising a photovoltaic panel, a photovoltaic inverter, a battery cluster, and the thermal management system according to any one of claims 1 to 13, wherein the photovoltaic panel is configured to convert solar energy into electric energy, the battery cluster is configured to store the electric energy from the photovoltaic panel, the photovoltaic inverter is configured to convert a direct current from the photovoltaic panel into an alternating current, and the thermal management system is configured to exchange heat with the battery cluster through a coolant.
